## Europäisches Patentamt
## European Patent Office
## Office européen des brevets

(11) Veröffentlichungsnummer: **0 370 229 B1**

(12) **EUROPÄISCHE PATENTSCHRIFT**

(45) Veröffentlichungstag der Patentschrift: **01.12.93**

(51) Int. Cl.5: **G01M 11/02**, G01B 11/24

(21) Anmeldenummer: **89119245.2**

(22) Anmeldetag: **17.10.89**

(54) **Interferometrisches Verfahren zur Prüfung von asphärische Wellenfronten erzeugenden optischen Elementen.**

(30) Priorität: **27.10.88 DE 3836564**

(43) Veröffentlichungstag der Anmeldung: **30.05.90 Patentblatt 90/22**

(45) Bekanntmachung des Hinweises auf die Patenterteilung: **01.12.93 Patentblatt 93/48**

(84) Benannte Vertragsstaaten: **AT CH DE FR GB IT LI NL SE**

(56) Entgegenhaltungen:
US-A- 4 435 079
US-A- 4 697 927
US-A- 4 743 117

OPTIK, Band 67, Nr. 1, April 1984, Seiten 1-20; B. DÖRBAND et al.: "Auslegung von Kompensationssystemen zur interferometrischen Prüfung asphärischer Flächen"

(73) Patentinhaber: **Firma Carl Zeiss**

**D-73446 Oberkochen(DE)**

(84) Benannte Vertragsstaaten: **CH DE FR IT LI NL SE AT**

(73) Patentinhaber: **CARL ZEISS-STIFTUNG HANDELND ALS CARL ZEISS**

**D-7920 Heidenheim (Brenz)(DE)**

(84) Benannte Vertragsstaaten: **GB**

(72) Erfinder: **Küchel, Michael, Dr.**
**Keplerstrasse 3**
**D-7082 Oberkochen(DE)**

## Beschreibung

Die interferometrische Prüfung der Form von rotationssymmetrischen, asphärischen Linsen- oder Spiegelflächen erfolgt üblicherweise so, daß man am Prüfling eine Prüfwelle mit in der Regel sphärischer Wellenform reflektieren läßt und dann die Differenz des optischen Lichtweges für die verschiedenen Auftreffpunkte zu einer bekannten Bezugsfläche ermittelt. Diese Bezugsfläche liegt üblicherweise in einem Referenzarm des Interferometers wodurch bekanntlich bei kohärentem Licht Interferenzerscheinungen entstehen. Wertet man diese Interferenzerscheinungen quantitativ aus, so kann die Ist-Form der Fläche ermittelt werden.

Das geschilderte Vorgehen ist ohne weiteres nur bei sehr schwach asphärischen Flächen möglich, bei denen die Abweichung von einer bestpassenden Sphäre nur sehr gering ist. Bei den in der Praxis vorkommenden asphärischen Flächen hingegen ist die Abweichung zwischen der sphärischen Prüfwelle und der zu prüfenden asphärischen Fläche in der Regel so erheblich, daß das vorstehend geschilderte Verfahren in dieser einfachen Form nicht mehr anwendbar ist. Die Prüfstrahlen treffen dann nur in einer schmalen Zone senkrecht auf die zu prüfende asphärische Fläche auf, nämlich dort wo die sphärische Prüfwelle die Asphäre tangierend berührt. Von dieser Zone ausgehend werden die Abweichungen zwischen den Richtungen der einfallenden und reflektierenden Strahlen zunehmend größer. Schließlich werden die reflektierten Strahlen überhaupt nicht mehr von der nachfolgenden Optik erfaßt und sind für die zu erzeugende Interferenzerscheinung endgültig verloren. Strahlen, die zwar noch durch alle Optiken und Blenden hindurchgehen, jedoch erhebliche Lichtwegdifferenzen von vielen Wellenlängen aufweisen, erzeugen im Interferogramm so hohe Streifenverformungen, daß eine Auswertung des Interferogrammes nicht mehr möglich ist.

Aus diesen Gründen werden für die Prüfung von asphärischen Flächen spezielle optische Linsensysteme, sogenannte Kompensationssysteme, in den Strahlengang der Prüfwelle gestellt, die im Zusammenwirken mit der zu prüfenden Soll-Asphäre wieder eine stigmatische Welle ergeben. Die Kompensationssysteme passen also die Wellenfront der Prüfwelle an die Form der zu prüfenden Asphäre an. Ein fehlerhafter Prüfling erzeugt dann nur geringe Lichtwegdifferenzen zur Bezugswelle. Die Interferenzstreifen sind deshalb nur leicht verformt und das Interferogramm wird dadurch quantitativ auswertbar.

Diese Verfahren arbeiten jedoch nur dann genau, wenn die optische Wirkung des gefertigten Kompensationssystems exakt bekannt ist, da es in das Prüfergebnis unmittelbar eingeht. Es ist nämlich nicht möglich, das Kompensationssystem in sich selbst zu überprüfen. Hierfür müßte eine Meisterasphäre zur Verfügung stehen, die wiederum nicht genau geprüft werden kann.

Die Kompensationssysteme müssen deshalb mit größter Sorgfalt und erreichbarer Präzision gefertigt werden. Alle in das optische Ergebnis eingehenden Parameter wie die Brechzahlen der verwendeten Gläser, die Homogenität der Gläser, Linsenradien, Linsendicken und Luftabstände sowie Linsenpassen müssen exakt eingehalten und einzeln vermessen werden. Die Fassung muß die genaue Zentrierung gewährleisten. Trotzdem lassen sich auch mit diesem hohen Aufwand keine fehlerfreien Kompensationssysteme fertigen.

Um das vorstehend genannte Problem zu umgehen, ist bereits vorgeschlagen worden, die Kompensationssysteme durch synthetische Hologramme zu ersetzen. Ein derartiges Verfahren ist beispielsweise in der US-PS 43 96 289 beschrieben. Diese Hologramme werden zur Anpassung an die zu prüfenden Asphären speziell berechnet und dann auf einen geeigneten Träger geplottet. In der Regel sind synthetische Hologramme allein jedoch nicht ausreichend, um die Wellenfront an den Prüfling anzupassen. Sie müssen daher häufig mit Linsen-Kompensationssystemen einfacherer Bauart noch kombiniert werden. Dies bringt jedoch wieder Justierprobleme mit sich. Weitere Schwierigkeiten sind die korrekte Ausblendung der unerwünschten Beugungsordnungen, die gegebenenfalls einen sogenannten "off-axis" Winkel für die Aufstellung des Hologrammes erfordern, der geringe Beugungswirkungsgrad in Hologrammen, vom Hologrammträger selbst verursachte Wellenfrontfehler etc.. Aus diesen Gründen werden Computerhologramme zwar in Labors, jedoch kaum in Werkstätten eigesetzt werden, wo es auf möglichst einfache Aufbauten ankommt.

Es ist auch bereits bekannt, die Interferogramme mit einer Kamera aufzunehmen und durch einen mit ihr gekoppelten Rechner auszuwerten. Hierbei können die Aspären dann in der gleichen mathematischen Form dargestellt werden, in der sie selbst formuliert worden sind. Mit derartigen Interferometern ist es möglich, auf eine vollständige Kompensation der Wellenfront der Prüfwelle zu verzichten. Man verwendet vielmehr einfachere Kompensationsoptiken und benutzt einen Teil des Meßbereichs des Interferometers dazu, den verbleibenden Rest an Asphärizität, den die Kompensationsoptik bestehen läßt, zu messen und rechnerisch vom Prüfergebnis zu elliminieren. Diesem Verfahren sind jedoch Grenzen gesetzt, da der auswertbare Meßbereich bei größeren Abweichungen zwischen der Prüfasphäre und der Wellenfront der Prüfwelle schnell erreicht wird.

Weiterhin ist bereits vorgeschlagen worden, Asphären abschnittsweise interferometrisch zu prüfen. Hierbei werden jeweils ringförmige Teilbereiche der Asphäre, in denen ihre Form der Wellenfront der für diesen Teilbereich angepaßten Prüfwelle entspricht, nacheinander interferometrisch vermessen. Ein solches Verfahren ist beispielsweise in der US-PS 47 43 117 beschrieben. Dort wird eine Prüfwelle mit ringförmiger Apertur auf die Oberfläche der zu prüfenden Asphäre gerichtet, durch Verschieben der Asphäre sichergestellt, daß die Prüfwelle etwa in Autokollimation wieder reflektiert wird und das reflektierte Ringbündel mit Hilfe eines Shearing-Interferometers ausgewertet.

Mit diesem Verfahren ist jedoch kein sicherer Anschluß der geprüften Teilbereiche aneinander erreichbar. Vielmehr summieren sich über den nacheinander erfolgenden Anschluß der geprüften Teilbereiche Meßfehler auf, so daß die Gesamtform der Asphäre nur mit relativ großer Meßunsicherheit bestimmt werden kann.

Aus den Proceedings of the SPIE, Vol. 396 (1983), Seite 99-101 ist eine Prüfvorrichtung für Asphären auf der Basis eines sogenannten Fizeau-Interferometers beschrieben, bei der das Fizeau-Objektiv relativ zum Prüfling verschoben werden kann. Auch hier werden jeweils ringförmige Teilbereiche der Asphären nacheinander auf Fertigungsunregelmäßigkeiten überprüft, und zwar Ringbereiche, in denen der Schmiegradius der Asphäre gerade dem Abstand des Fokuspunktes der von dem Fizeau-Objektiv erzeugten sphärischen Referenzwelle entspricht.

Auch bei dieser Vorrichtung können die geprüften Teilbereiche nicht ohne weiteres in der Weise aneinander angeschlossen werden, daß sich daraus die Form der gesamten Asphäre ergibt. Denn die Relatiylage zwischen Kollimatorobjektiv und Prüfling wird nicht gemessen, so daß kein rechnerischer Anschluß der Teilbereiche aneinander möglich ist. Außerdem ändert sich durch das Verschieben des Fizeau-Objektivs die optische Lichtwegdifferenz im Prüfzweig des Interferometers global für die gesamte Prüffläche, wodurch ebenfalls die Zuordnung der einzelnen Interferenzordnungen zueinander in den verschiedenen Stellungen des Objektivs verloren geht.

Aus der US-PS 40 74 937 ist es bekannt, zur Prüfung von Flächen mit relativ großen Radien in einem Fizeau-Interferometer zwichen der Referenzfläche des Fizeau-Objektivs und dem Prüfling eine axial verschiebbare Kollimatoroptik vorzusehen. Das Verschieben dieser Kollimatoroptik dient dazu, den Radius der Prüfwelle an Prüflinge mit unterschiedlichen Radien anzupassen. Ein Vermessen von asphärischen Prüflingen ist dort nicht beschrieben.

In der US-PS 43 87 994 ist ein Twyman-Green-Interferometer beschrieben, in dessen Prüfarm ein asphärischer Prüfling gegen ein im Referenzarm des Interferometers angeordnetes Meisterstück gemessen wird. Die Interferogramme werden hier elektronisch mit einer CCD-Kamera ausgewertet. Hierbei wird entweder der Prüfling oder das Meisterstück axial verschoben und die Punkte maximalen Kontrasts für die verschiedenen Stellungen statistisch ausgewertet. Besonders nachteilig bei diesem Verfahren ist, daß für jede zu prüfende Asphäre ein entsprechendes Meisterstück benötigt wird.

Es ist die Aufgabe der vorliegenden Erfindung, ein Verfahren und eine Einrichtung zur Prüfung von optischen Elementen, die asphärische Wellenfronten liefern, anzugeben, mit der auf möglichst einfache Weise Prüflinge mit unterschiedlicher Asphärizität vermessen werden können, wobei insbesondere die gesamte Fläche des Prüflings bzw. die vom Prüfling erzeugte asphärische Wellenfront absolut mit hoher Genauigkeit ermittelt werden kann.

Unter "optischen Elementen, die asphärische Wellenfronten liefern" sind nicht nur asphärische Oberflächen von Linsen oder Spiegeln gemeint. Auch Linsen mit sphärischen Oberflächen, die im Durchgang geprüft werden, transformieren eine einfallende Planwelle in eine unter Umständen sogar stark asphärische Welle. Das zu schaffende Verfahren soll daher außerdem zur Prüfung von sphärischen Linsen in Transmission geeignet sein.

Diese Aufgabe wird durch ein Verfahren nach dem Anspruch 1 oder eine Vorrichtung nach dem Anspruch 6 gelöst.

Mit dem erfindungsgemäßen Verfahren wird die Asphärizität des Prüflings nicht auf einmal, sondern sukzessive in aneinander anschließenden Teilbereichen kompensiert, in dem die Relativposition zwischen dem Kollimator und dem Prüfling verändert und jeweils nur der für diese Stellung kompensierte Teilbereich ausgewertet wird. Die Ergebnisse der nacheinanderfolgenden Auswertungen der Teilbereiche können jedoch ohne Schwierigkeiten über lagert und aneinander angeschlossen werden, da die Relativposition genau gemessen wird und das Ergebnis der Positionsmessung bei der Auswertung der Interferogramme berücksichtigt wird. Außerdem ist der Anschluß der Phasenlage der Prüfwelle in allen Teilbereichen der Asphäre an ihren Scheitelpunkt immer sichergestellt, wenn der Lichtweg auf der Achse im Prüfarm des Interferometers konstant gehalten wird, was bei einem Verschieben des Kollimators und auch bei einem Verschieben des Prüflings immer möglich ist, wenn dieser in Transmission geprüft wird. Durch diese beschriebenen Maßnahmen kann daher die Form der zu prüfenden asphärischen Wellenfront absolut mit hoher Genauigkeit bestimmt werden.

Wieviele einzelne Verstellschritte notwendig sind, ist von der konkreten Meßaufgabe abhängig und wird von verschiedenen Faktoren bestimmt:

Einmal soll die Überdeckung des gemessenen Teilbereiches der Asphäre von Schritt zu Schritt so groß sein, daß durch die Redundanz des Verfahrens zufällige Fehler reduziert werden.

Die maximale Schrittweite hängt davon ab, wie gut die Wellenfront der Prüfwelle und an die Asphärizität des Prüflings angepaßt ist, bzw wie stark die Asphäre von der Prüfwelle abweicht.

Die Schrittweite wird außerdem durch den nutzbaren Meßbereich bestimmt, in dem die Interferenzerscheinungen ausgewertet werden können. Hierbei ist die Anzahl der Bildpunkte, bzw. die Auflösung der verwendeten Kamera, mit der die Interferogramme aufgenommen werden, eine wichtige Kenngröße.

Wichtig ist außerdem, daß ein Meßvorgang nicht zu lange dauert, damit der Einfluß von sich ändernden Umgebungsbedingungen, wie z.B. thermisch bedingtes Driften, das Ergebnis nicht verfälscht. Es ist daher zweckmäßig, den Kollimator bei jedem Prüfvorgang in beiden Richtungen längs der optischen Achse zu verschieben also z.B. in Richtung auf den Prüfling und daran sofort anschließend ein zweites Mal die gleiche Strecke wieder zurück, und dann den Mittelwert der Meßwerte zu bilden. Damit ist der lineare Anteil derartiger Fehlereinflüsse kompensiert.

Als Kollimator kann einmal eine Optik verwendet werden, die eine etwa sphärische Welle in Richtung auf den Prüfling aussendet. Es ist dann zweckmäßig, Abweichungen dieser Wellenfront von einer exakten Sphäre entweder vorab oder nach der Vermessung des Prüflings durch eine Kalibriermessung an einem bekannt guten sphärischen Spiegel, der ungefähr der bestpassenden Sphäre des Prüflings entspricht, zu ermitteln. Die so festgestellten Abweichungen, die in der Größenordnung von Bruchteilen der Wellenlänge liegen, werden dann bei der Auswertung der Interferogramme des Prüflings mit berücksichtigt. Von besonderem Vorteil ist es jedoch, als Kollimator eine Einzellinse zu verwenden. Eine solche Einzellinse ist in vielen Fällen bereits in der Lage einen großen Anteil der Asphärizität des Prüflings zu kompensieren. Dies ermöglicht es, die Anzahl der verschiedenen Stellungen des Kollimators, in denen die Messungen durchzuführen sind, zu verringern. Denn wenn bereits ein Teil der Asphärizität des Prüflings von der Einzellinse aufgenommen wird, sind die kompensierten Bereiche auf dem Prüfling, die nacheinander aufgenommen werden müssen, sehr viel breiter und andererseits der gesamte Verfahrweg für den Kollimator in Richtung der optischen Achse kleiner.

Wählt man eine Einzellinse als Kollimator, dann ist es zweckmäßig, die exakte Form der von der Einzellinse ausgehenden Wellenfront aus den Linsendaten zu berechnen und dann bei der Auswertung der Interferogramme des Prüflings d.h. bei der Ermittlung der Soll- Lichtwegdifferenzen im Prüfzweig des Interferometers zu berücksichtigen. Denn die Berechnung der tatsächlichen Lichtwegdifferenzen stellt unter Einbeziehung der optischen Daten nur einer einzigen Linse, d.h. der Parameter zwei Radien, Scheiteldicke und Brechzahl des Glases, mit den heutigen Rechnern kein Problem dar.

An dieser Stelle sei noch erwähnt, daß die Form der von der Einzellinse erzeugten Prüfwelle alternativ zu der angesprochenen rechnerischen Ermittlung auch dadurch ermittelt werden kann, daß in Umkehrung des eigentlichen Prüfverfahrens der Kollimator gegenüber einem sphärischen Spiegel verschoben und in verschiedenen Stellungen Interferogramme aufgenommen werden. Analog zu dem bei der eigentlichen Prüfung durchgeführten Auswerteverfahren läßt sich bei der Auswertung der entsprechenden Interferogramme für den sphärischen Spiegel die Asphärizität der Prüfwelle bestimmen.

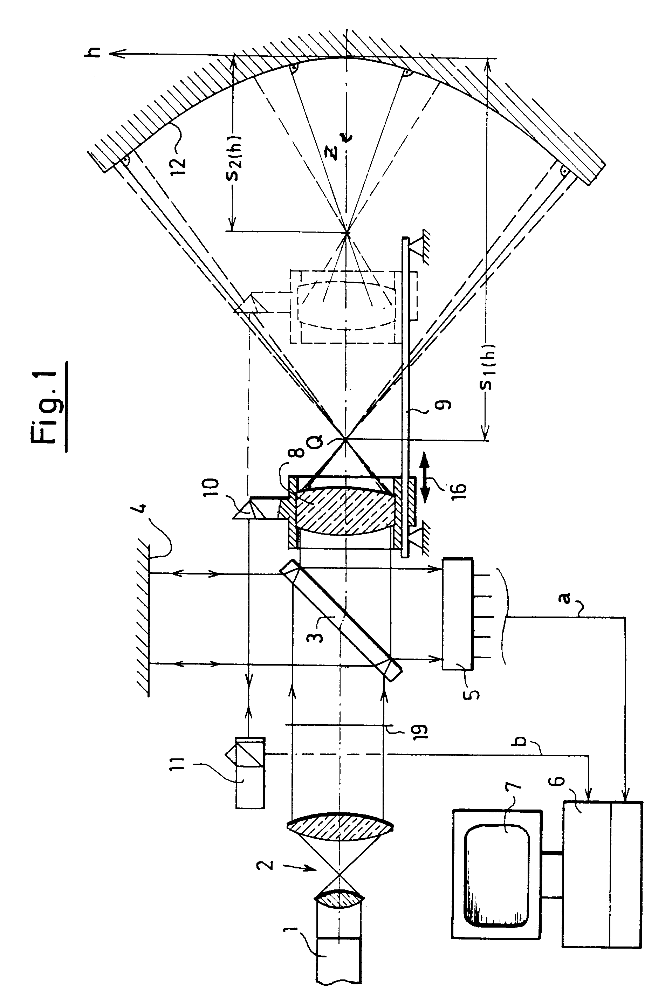

Weitere Vorteile der Erfindung ergeben sich aus der nachstehenden Beschreibung von Ausführungsbeispielen anhand der Figuren 1-5 der beigefügten Zeichnungen.

Hierbei ist

| Fig. 1 | eine Prinzipskizze, die den optischen Aufbau des Interferometers für die Prüfung von asphärischen Konkavspiegeln zeigt; |
| Fig. 2 | ist eine Prinzipskizze, die ein im Vergleich zu Fig. 1 im Prüfzweig des Interferometers leicht modifiziertes Ausführungsbeispiel darstellt; |
| Fig. 3 | zeigt den Prüfzweig des Interferometers aus Fig. 1 in einer abgewandelten, für die Prüfung von transparenter Optik im Durchgang geeigneten Ausführungsform; |
| Fig. 4 | zeigt das Ausführungsbeispiel nach Fig. 3 während einer Kalibriermessung bei entferntem Prüfling; |
| Fig. 5 | ist eine Prinzipskizze, die ein alternatives Ausführungsbeispiel auf der Basis eines Mach-Zehnder Interferometers für die Prüfung von transparenter Optik im Durchgang zeigt. |

Die in Fig. 1 dargestellte Prüfvorrichtung baut auf einem Twyman-Green-Interferometer auf. Hier dient ein Laser (1) als Lichtquelle, dem eine Aufweitungsoptik (2) nachgeschaltet ist. Die hiervon ausgehende, durch den Strich (19) symbolisierte Planwelle fällt auf den Strahlteiler (3) des Interferometers auf und wird in den Referenzarm und den Prüfarm des Interferometers aufgeteilt. Im Referenzarm ist ein ebener Spiegel (4) angeordnet während im Prüfzweig ein Kollimator (8) eingesetzt ist, der noch genauer beschrieben werden wird. Für die nachfolgende Betrachtung wird davon ausgegangen, daß dieser Kollimator (8) eine Prüfwelle mit exakt sphärischer Wellenfront erzeugt.

Die vom Kollimator (8) ausgehende Prüfwelle wird von dem dahinter angeordneten Prüfling (12), im beschriebenen Beispiel ist dies ein asphärischer Konkavspiegel, reflektiert und gelangt über den nochmaligen Durchgang durch den Kollimator (8) zum Strahlteiler (3) zurück. Dort interferieren die Prüf- und die Referenzwelle und das entstehende Interferogramm wird von einer am Ausgang des Interferometers angeordneten CCD-Kamera (5) detektiert. Die Kamera (5) ist über die Leitung (a) und ein geeignetes Interface an einen Rechner (6) angeschlossen. Die Interferogramme bzw. die zur Darstellung der Form des Prüflings (12) benutzte Grafik kann dann auf dem Bildschirm (7) des Rechners (6) dargestellt werden.

Der Kollimator (8) ist mit Hilfe einer präzisen Führung (9) wie durch den Pfeil (16) angedeutet längs der optischen Achse im Prüfarm des Interferometers in Richtung auf den Prüfling (12) verschiebbar. Die Position des Kollimators (8) längs der Achse wird von einem separaten Laserinterferometer (11) bestimmt, das ein Tripelprisma auf dem Halter des Kollimators (8) anmißt. Die entsprechenden Positionsmeßwerte werden über die Verbindungsleitung (b) ebenfalls an den Rechner (6) übergeben. Anstelle des Interferometers (10/11) kann natürlich auch ein anderes Längenmeßsystem mit genügend guter Auflösung, beispielsweise ein inkrementales Gittermeßsystem eingesetzt werden.

Da die Prüfwelle eine perfekte sphärische Welle sein soll, gehen alle auf den Prüfling (12) auftreffenden Strahlen von dem mit Q bezeichneten Fokuspunkt aus. Der nutzbare Meßbereich und damit der Verschiebebereich des Kollimators (8) ist nun so gewählt, daß in den beiden extremen Endstellungen zumindest ein Teilbereich aus der Apertur der Prüfwelle senkrecht auf die Randzone des Prüflings (12) bzw. senkrecht auf seine Scheitelzone auffällt. In den Zwischenstellungen sind jeweils andere Zonen des Prüflings (12) mit einer anderen Höhe (h) optimal prüfbar, nämlich dort wo die Prüfwelle jeweils die asphärische Fläche des Prüflings (12) tangiert. Die beiden in Fig. 1 gezeigten Stellungen, nämlich dort wo der Abstand des Fokuspunktes Q vom Scheitelpunkt der Asphäre mit S1(h) und S2(h) bezeichnet ist, liegen sehr nahe an den Endstellungen.

Für den Strahl auf der optischen Achse im Prüfzweig des Interferometers ändert sich durch die Verschiebung des Kollimators (8) der optische Weg nicht. Die Messung der Interferenzphase für diesen Bereich unmittelbar um die Achse erlaubt daher die Kontrolle und gegebenenfalls eine Korrektur von Umwelteinflüssen wie z.B. thermisches Driften.

Nachfolgend wird die Durchführung des Meßverfahrens und der Auswertevorgang für die dabei gewonnenen Interferogramme näher erläutert:

Die Grundeinstellung des Kollimators (8) zum Prüfling (12), also der Grundscheitelabstand, wird zu Beginn der Messung mit Hilfe eines Probeglases mit bekanntem Radius vorgenommen, wobei der Radius zweckmäßig dem Scheitelkrümmungsradius des Prüflings (12) entspricht. Zunächst wird dieses Probeglas in den Aufbau gesetzt und der Kollimator (8) hierzu auf "gerade Streifen" eingestellt. Die Lage des Scheitels dieses Probeglases wird mit Hilfe eines empfindlichen, mechanisch elektronischen Tasters relativ zum festehenden Teil des Interferometers fixiert. Nun kann das Probeglas gegen die Asphäre (12) ausgetauscht werden, wobei die Lage des Scheitels des Prüflings (12) durch den Taster hinreichend genau reproduziert werden kann.

Während des eigentlichen Meßvorganges werden nun für verschiedene Stellungen des Kollimators (8) zwischen den in Fig. 1 dargestellten extremen Positionen Interferogramme aufgenommen, mit der Kamera (5) registriert und aus den registrierten Helligkeitswerten die Interferenzphase bzw. die gemessenen Ist-Lichtwegdifferenzen für die Pixel der CCD-Kamera (5) in dem Bereich berechnet, der sich unmittelbar um die Zone herum erstreckt, in dem die Prüfwelle senkrecht auf die Fläche des Prüflings (12) auftrifft. Die entsprechende Höhe (h) für diese kompensierte Zone kann für jeden Scheitelabstand (s), in dem Interferogramme aufgenommen wurden, aus der Gleichung Z(h) für die Asphäre berechnet werden. Die entsprechende Meßwerte für s(h) liefert das Interferometer (11). Entsprechend ergeben sich daraus die gemessenen Lichtwegdifferenzen $l_{ist}(h)$.

Für einen bestimmten, eingestellten Scheitelabstand s, der im Rechner als Zahlenwert vorliegt, wird nun die Soll-Lichtwegdifferenz zu jedem Punkt der asphärischen Fläche berechnet. Für die lateralen Koordinatenwerte x,y bzw. $h = (x^2 + y^2)^{1/2}$ dabei von den Positionen x′, y′ der einzelnen Pixels der CCD-Kamera ausgegangen. Sie werden durch den Kollimator (8) auf die asphärische Fläche abgebildet; beim Abbildungsmaßstab $\beta'(s_o)$ gilt:

$$h' = (x'^2 + y'^2) \qquad (1)$$

$$h(s_o) = - \beta\,'\,(s_o)\,h' \qquad (2)$$

Die Soll-Lichtwegdifferenz $l_{soll}(h)$ zwischen Prüfstrahl und Vergleichsstrahl beträgt:

$$l_{soll}\,(h) = 2\,[\text{konst.} - s_o + ((s_o - z(h))^2 + h^2)^{1/2}] \qquad (3)$$

Hierin ist konst. eine beliebige, uninteressante Konstante, die zu Null gewählt werden kann.
   In obiger Gl. (3) sind alle Größen bekannt:
   h       ergibt sich aus den Koordinaten der Pixels und dem gewählten Scheitelabstand $s_o$ nach (1) und (2)
   z(h)    ist aus der Formel für die Soll-Asphäre bekannt
   $s_o$   ist der eingestellte Scheitelabstand des Kollimatorobjektivs
Die Fehler der asphärischen Fläche ergeben sich damit zu

$$l(h) = l_{ist}(h) - l_{soll}(h) \qquad (4)$$

In $l_{soll}(h)$ stellt $s_o$ einen Parameter dar, h ist die unabhängige Variable. $l_{soll}(h)$ kann also als stetige Funktion berechnet werden. Die interferometrische Phasendifferenz $\phi_{soll}(h)$ ergibt sich aus der Soll-Lichtwegdifferenz zu

$$\phi_{soll}(h) = 2\pi\,\frac{l_{soll}(h)}{\lambda} \qquad (5)$$

$\phi_{soll}(h)$ nach (5) ist stetig gegeben; die interferometrisch tatsächlich gemessene Phasendifferenz $\phi_{ist}(h)$ ergibt sich aus der tatsächLichen Lichtwegdifferenz $l_{ist}(h)$ nach:

$$\phi_{ist}(h) = 2\pi\,\frac{l_{ist}(h)}{\lambda} \qquad (6)$$

$\phi_{ist}(h)$ wird durch das interferometrische Meß- und Auswerteverfahren nur modulo $2\pi$ erhalten; der Phasenfehler der asphärischen Fläche

$$\Delta\phi\,(h) = \phi_{ist}(h) - \phi_{soll}(h) \qquad (7)$$

ist daher auch nur modulo $2\pi$ berechenbar.
   Damit die Redundanz des Meßverfahrens ausgenützt werden kann, d.h. damit die Meßergebnise aus verschiedenen Scheitelabständen s für ein und dasselbe Pixel der CCD-Kamera sinnvoll gemittelt werden können, müßte jedoch der Phasenfehler $\Delta\phi\,(h)$ vollständig bekannt sein. Um diese Schwierigkeit zu umgehen, werden nicht die Phasenfehler $\Delta\phi\,(h)$ selbst gemittelt, sondern die x- und y-Differenzen der Phasenfehler benachbarter Pixel. Durch das hiermit vorgenommene Differenzieren in x- und y-Richtung wird die nicht bekannte Konstante implizit zum Verschwinden gebracht. Wenn das fertige Ergebnis vorliegt, das aus dem gewichteten Mittel der x- und y-Differenzen zwischen allen Pixeln besteht, auf denen jemals ein Interferogramm entstanden war, müssen die Differenzen zu der eigentlichen Fehlerfunktion aufintegriert werden. Hierbei entsteht kein Problem, da die asphärische Fläche stetig ist, also keine Sprungstellen mit Sprunghöhen von m $\lambda$ /2 aufweist, was zu Phasensprüngen von m • $2\pi$ zwischen benachbarten Pixeln Anlaß geben würde.
   Verbleibende, vom Kollimator (8) selbst bewirkte Wellenfrontfehler können durch eine Kalibriermessung an einem bekannt guten sphärischen Spiegel unschädlich gemacht werden. Hierzu wird am Ende der Messung der Asphäre, wenn das vollständige Ergebnis für die Abweichung der Ist-Wellenfront von der Soll-Wellenfront der Asphäre vorliegt, hiervon die am sphärischen Spiegel gemessene Wellenfront subtrahiert. Im verbleibenden Rest sind dann die Wellenfrontfehler nur noch auf die Fehler des zur Kalibrierung verwendeten sphärischen Spiegels bezogen, alle anderen Wellenfrontfehler des Interferometers, wie die des Strahlteilers (3), des Referenzspiegels (4) und Kollimators (8) sind dann eliminiert. Sphärische Referenzspiegel können im Gegensatz zu asphärischen Flächen mit hoher Flächengenauigkeit gefertigt werden.

In Gleichung (5) wurde vorausgesetzt, daß die asphärische Fläche des Prüflings (12) scharf und aberrationsfrei auf die CCD-Kamera (5) abgebildet wird. Diese Voraussetzung ist gleichbedeutend mit der Bedingung, daß der Kollimator für ein endliches Bildfeld korrigiert ist. Der Lichtweg ist dann für alle mögliche auf den Prüfling auffallenden Strahlen, auch für die in Fig. 1 gestrichelt dargestellten Strahlen, der gleiche. Entsprechend steht für die Auswertung nicht nur der Teil der Prüflingsoberfläche zur Verfügung, auf den die Prüfwelle exakt senkrecht auftrifft, sondern größere Teilbereiche der Prüflingsoberfläche, so daß die Anzahl der Messungen bzw. der verschiedenen Stellungen des Kollimators (8) gering gehalten werden kann. Die Forderung nach einem korrigierten endlichen Bildfeld läßt sich beispielsweise dann erfüllen, wenn als Kollimator ein Photoobjektiv oder ein Mikroskopobjektiv verwendet wird. Es ist jedoch auch möglich, als Kollimator eine aberrationsbehaftete Einzellinse zu verwenden, die bereits einen großen Teil der Asphärizität des Prüflings kompensiert. Für den in Fig. 1 dargestellten konkaven Prüfling (12) eignet sich dazu die in Fig. 1 dargestellte Sammellinse (sphärisch unterkorrigiert). Da diese nun aber nicht für ein endliches Bildfeld korrigiert ist, muß zur Ermittlung der Soll- Lichtwegdifferenzen $l_{soll}(h)$ anstelle der Gleichung (3) für jede axiale Stellung s(h) und für jede Höhe (h) bzw. jedes Pixel der Kamera (5) der dort auftreffende Strahl explizit durchgerechnet werden. Hierfür existieren jedoch entsprechende Rechenprogramme.

Da keine vollständige Kompensation der gesamten Prüfungsfläche durch den Kollimator (8) angestrebt wird, kann eine kleine Anzahl verschiedenartiger, hochpräziser Einsellinsen angefertigt werden, mit denen dann eine Vielzahl verschiedener Asphären geprüft werden kann.

Es wurde weiterhin vorausgesetzt, daß die Bewegung des Kollimators (8) eine ideale Parallelverschiebung genau entlang der optischen Achse im Prüfzweig des Interferometers ist, die mit der Rotationsachse des Prüflings (12) identisch sein soll. Abweichungen von dieser idealen Bewegung verursachen Meßfehler. So bewirkt eine Drehung des Kollimators (8) um seinen Knotenpunkt eine verschwindend kleine, gleichförmige Erhöhung des Lichtweges für alle Strahlen der kompensierten Zone. Die kompensierte Zone wird also auf dem Prüfling (12) fälschlicherweise als "Tal" interpretiert. Eine laterale Verschiebung des Kollimators (8) ohne Drehung bewirkt eine Verkürzung des Lichtweges auf der Seite der kompensierten Zone, zu der hin die Verschiebung erfolgte, und eine gleich große Erhöhung des Lichtweges auf der gegenüberliegenden Seite. Dazwischen sind die Lichtwege unverändert geblieben. Entsprechend ist der Messung in der kompensierten Zone ein "Kippungsterm" überlagert. Wenn sichergestellt ist, daß durch den Herstellungsprozess für den Prüfling (12) keine in sich verwundene Fläche entsteht sondern dieser rotationssymmetrisch ist, darf der Kippungsterm eliminiert werden. Er kann entweder rechnerisch bestimmt und subtrahiert werden oder sei ne gemessenen Komponenten in x- und y-Richtung werden dazu benutzt, den Kollimator (8) in Soll-Position zu justieren. Hierzu kann der Rechner (6) in Figur 1 in einem geschlossenen Regelkreis mit einer Justiervorrichtung verbunden sein, auf die der Kollimator (8) gesetzt ist.

Alternativ hierzu ist es auch möglich, Versatz und Verkippung des Kollimators (8) durch zusätzliche Einrichtungen wie z.B. ein Autokollimationsfernrohr oder ein Geradheits-Interferometer zu messen und bei der Auswertung der Interferogramme zu berücksichtigen.

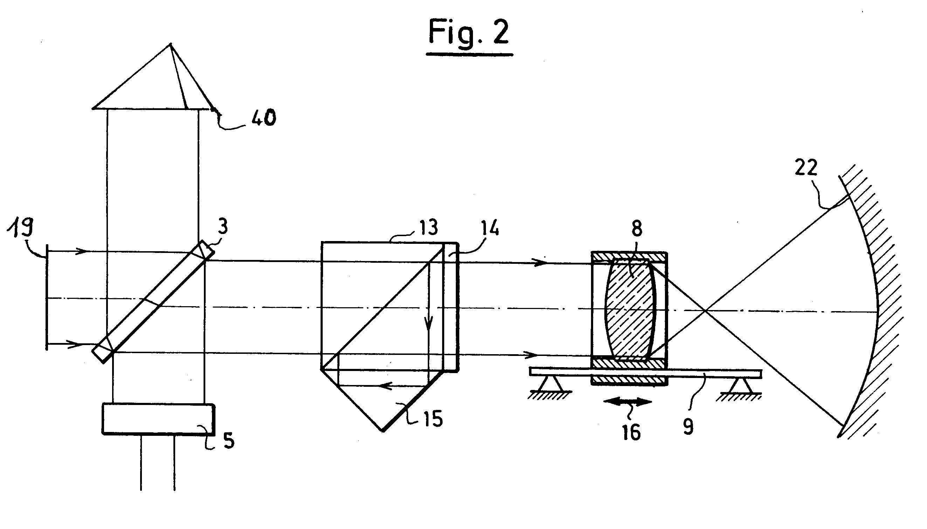

Eine weitere Möglichkeit zur Eliminierung des Kippungsterms bei gleichzeitiger Erhöhung der Empfindlichkeit der Interferometeranordnung um den Faktor 2 läßt sich erzielen, wenn man wie in Figur 2 dargestellt in den Prüfarm des Interferometers eine optische Doppelpaßanordnung einfügt. Diese besteht aus einem polarisierenden Strahlteilerwürfel (13), auf dessen dem Kollimator (8) zugewandter Seite eine sogenannte λ/4-Platte (14) aufgesetzt ist. Die vom Prüfling (22) reflektierte Prüfwelle wird dann beim nochmaligen Eintritt in den polarisierenden Strahlteilerwürfel (13) seitlich reflektiert und nach Umlenkung an einem Retroreflektor (Tripelprisma 15) nochmals in Richtung auf den Prüfling (22) ausgesandt. Die zweite Prüfwelle verläuft jedoch punktsymmetrisch zur optischen Achse verglichen mit der ersten Prüfwelle. Im Referenzarm befindet sich jetzt ein Tripelspiegel (40), der die Referenzwelle ebenfalls um 180° dreht, damit Ebenheitsabweichungen der in das Interferometer einfallenden Planwelle (19) das Meßergebnis nicht beeinflussen. Entsprechend werden entgegengesetzt gleiche Differenzen der Lichtweglänge auf beiden Seiten der optischen Achse, wie sie bei Kippung und Versatz auftreten, automatisch eliminiert. Natürlich ist dieses Verfahren nur für rotationssymmetrische Prüflinge anwendbar.

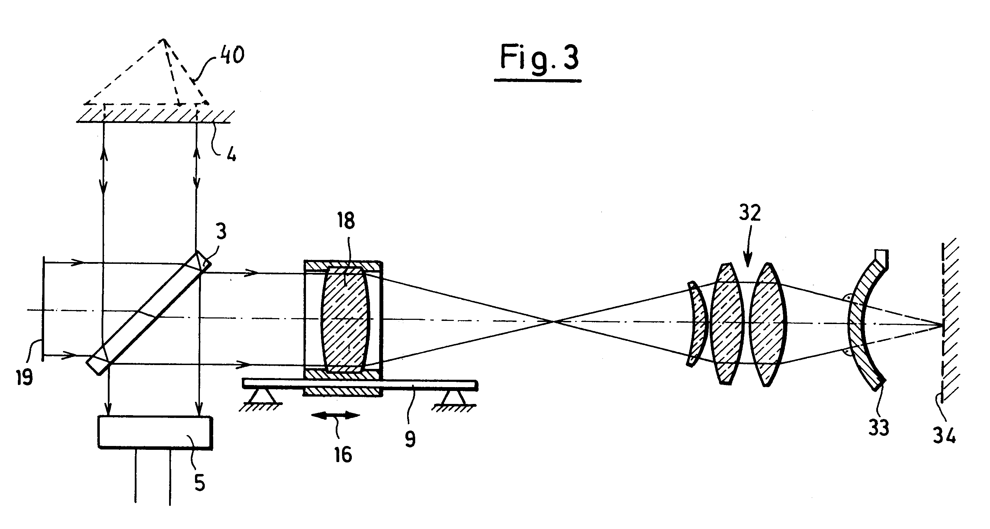

In der Prinzipskizze nach Figur 3 ist im Meßzweig des Interferometers ein Prüfaufbau dargestellt, mit dem sich Linsen, und zwar nicht nur Einzellinsen sondern auch teilmontierte oder komplette Optiken, im Durchgang prüfen lassen. In der gezeigten Darstellung ist der Kollimator mit (18) und der Prüfling mit (32) bezeichnet. Hinter der zu prüfenden Optik ist ein sphärischer Autokollimationsspiegel (33) eingesetzt. Der Radius dieses Autokollimationsspiegels (33) ist so gewählt, daß er in etwa der vom Prüfling (32) erzeugten Wellenfront in einer mittleren Stellung des Kollimators (18) entspricht.

7

Die Vermessung der Asphärizität des Prüflings (32) erfolgt nun wie anhand von Figur 1 beschrieben dadurch, daß der Kollimator (18) gegenüber dem Prüfling (32) in verschiedene Stellungen verschoben wird so daß stets unterschiedliche Aperturbereiche der vom Prüfling (32) asphärisch deformierten Wellenfront die Bedingung für Autokollimation, d.h. senkrechten Auffall auf den Konvexspiegel (33) erfüllen. Auch in dieser Anordnung bleibt die optische Weglänge für den auf der Achse des Prüfarms des Interferometers verlaufenden Strahl in allen Stellungen des Kollimators gleich, so daß sich die Wellenfront in diesem Bereich global nicht ändert. Dies trifft auch dann zu, wenn anstelle des Kollimators (18) die zu prüfende Optik (32) axial verschoben wird.

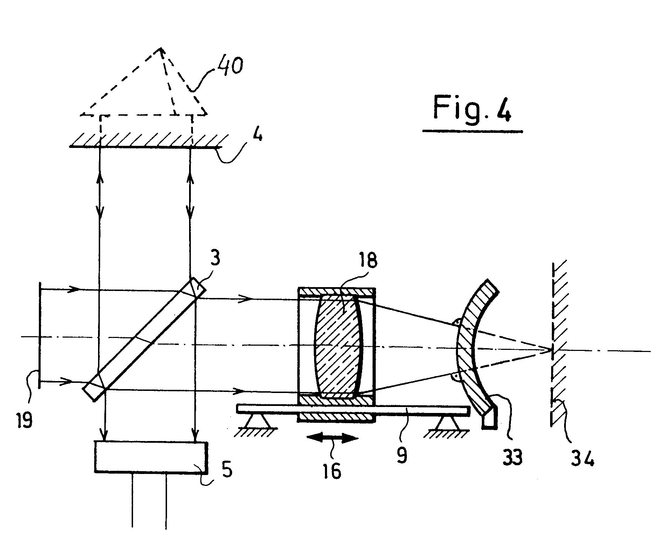

Absolut läßt sich die Form der vom Prüfling (32) deformierten Wellenfront messen, indem man den Kollimator (18) in eine Stellung verschiebt, bei der sich für die zu prüfende Optik (32) objektseitig und bildseitig gleicher Aperturen der Strahlenbündel ergeben, d.h. die Schnittweiten auf beiden Seiten der Optik (32) nahezu gleich sind. Wird dann anschließend wie in Figur 4 dargestellt der Prüfling aus dem Strahlengang Im Prüfzweig des Interferometers entfernt und der sphärische Autokollimationsspiegel (33) in die dort gezeichnete Position im konvergenten Strahlengang hinter dem Kollimator (18) gebracht und dabei noch genau um 180° um die optische Achse rotiert, dann können die Fehler der Prüfanordnung, nämlich die Wellenfrontverzerrungen, die vom Strahlteiler (3) und vom Referenzspiegel (4) des Interferometers verursacht werden, sowie die Fehler des Kollimators (18) und des Autokollimationsspiegels (33) vollständig eliminiert werden. Hierzu ist einfach die Differenz der Lichtwegdifferenzen zu bilden, die sich aus der Auswertung der Interferogramme in den beiden in Figur 3 und Figur 4 dargestellten Aufbauten mit und ohne Prüfling gewinnen lassen.

Ersetzt man den sphärischen Spiegel (33) in Figur 3 bzw. Figur 4 durch den dort gestrichelt dargestellten Planspiegel (34), so entsteht ein Katzenauge. Der auf den Spiegel auffallende und wieder austretende Strahl ist punktsymmetrisch zur optischen Achse im Prüfzweig des Interferometers und etwaige Geradheitsfehler der Führung (9) werden automatisch kompensiert. Gleichzeitig wird der Planspiegel (4) im Referenzarm des Interferometers wie im Ausführungsbeispiel nach Fig. 2 durch ein Tripelprisma oder den gestrichelt gezeichneten Tripelspiegel (40) ersetzt, um auch die Referenzwelle um 180° zu drehen.

Dieser Aufbau setzt jedoch wieder rotationssymmetrische Prüflinge voraus. Punktsymmetrische Fehler des Prüflings wie z.B. Koma können mit einer solchen Anordnung nicht gemessen werden.

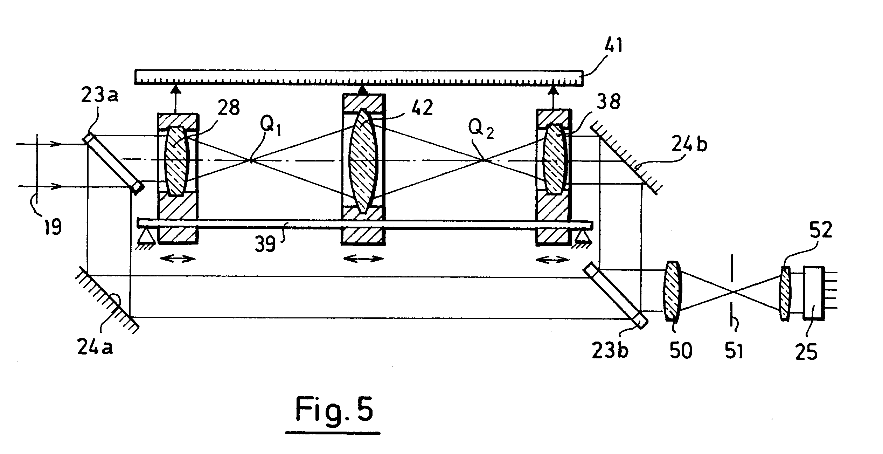

Die anhand der Fig. 1-4 beschriebenen Vorrichtungen bauen auf einem Interferometer vom Typ Twyman-Green auf. Es ist jedoch genauso gut möglich, das erfindungsgemäße Verfahren auf Vorrichtungen durchzuführen, die auf Interferometern vom Typ Mach-Zehnder basieren. Solche Aufbauten können insbesondere für die Vermessung von Transparentoptik in Transmission oder nicht rotationssymmetrischen asphärischen Spiegeln in Reflexion sein. Ein derartiger Aufbau auf der Basis eines Mach-Zehnder Interferometers ist in Fig. 5 dargestellt. Hier ist wieder die einfallende Planwelle mit (19) bezeichnet. Die Planwelle (19) wird von einem ersten Strahlteiler (23a) in den Meß- und den Prüfarm aufgeteilt und die an den beiden Planspiegeln (24a und 24b) reflektierten Teilwellen werden an dem zweiten Strahlteiler (23b) des Mach-Zehnder Interferometers wieder vereinigt. Während der Referenzarm des Interferometers leer ist, befindet sich im Prüfarm des Interferometers die zu prüfende Linse (42) zwischen zwei Kollimatorobjektiven (28 und 38). Die Kollimatorobjektive (28 und 38) können entweder korrigierte Systeme sein, die Planwellen in sphärische Wellen transformieren, oder wie in der Fig. 5 dargestellt, Einzellinsen. Sie müssen nicht unbedingt die gleichen optischen Daten besitzen.

Der Prüfling (42) und die beiden Kollimatoren (28 und 38) sind wie durch die Pfeile angedeutet entlang der optischen Achse im Prüfarm des Interferometers mittels der Führung (39) verschiebbar. Zur Durchführung des Prüfverfahrens werden jeweils zwei der drei Bauteile, entweder die beiden Kollimatoren (28 und 38) oder der Prüfling (42) und einer der beiden Kollimatoren gleichzeitig verschoben, und die beiden Scheitelabstände des Prüflings (42) zu beiden Kollimatoren (28 und 38) mit Hilfe eines vereinfacht als Maßstab (41) gezeichneten Längenmeßsystems für verschiedene Abstände ermittelt. Auf diese Weise ist wieder ein zonenweises Abprüfen der Asphärizität des Prüflings (42) möglich. Hierbei ist außerdem darauf zu achten, daß dann, wenn sich der Strahlquerschnitt zwischen der in den Kollimator (28) eintretenden Welle und der aus dem Kollimator (38) austretenden Welle ändert, Ebenheitsfehler der in das Interferometer eintretenden Planwelle (19) in das Ergebnis eingehen können.

Am Ausgang des Interferometers hinter dem die beiden Zweige wieder zusammenführenden Teilerspiegel (23b) ist ein aus den beiden Linsen (50 und 52) bestehendes afokales optisches System angeordnet, welches den Prüfling (42) scharf auf die nachfolgende CCD-Kamera (5) abbildet und den Strahlquerschnitt, der aus dem Interferometer austritt, an die Fläche der CCD-Kamera (25) anpaßt. Im Zwischenfokus dieses afokalen Systems (50,52) befindet sich eine Blende (51). Diese Blende (51) läßt nur Strahlen aus dem kompensierten Bereich des Prüflings passieren, in dem die Wellenfront der Prüfwelle an die Asphärizität des Prüflings (42) angepaßt ist. Damit wird verhindet, daß Strahlen außerhalb des kompensierten Bereiches störende Interferenzen auf der photoempfindlichen Fläche der CCD-Kamera (25) erzeugen. Dieses optische System (50,52) kann auch in den Ausführungsbeispielen nach Fig. 1-4 vor die dort mit (5) bezeichnete CCD-Kamera gesetzt werden.

Auch im Ausführungsbeispiel nach Fig. 5 können wieder Kalibriermessungen durchgeführt werden, um Wellenfrontfehler bedingt durch die Kollimatoren (28 und 38) zu eliminieren. Hierzu wird der Prüfling (42) aus dem Strahlengang entfernt und die beiden Kollimatoren (28 und 38) so aufeinander zu verschoben, daß die beiden Fokuspunkte Q1 und Q2 aufeinanderfallen.

**Patentansprüche**

1. Verfahren zur Prüfung von optischen Elementen, die asphärische Wellenfronten liefern, mit Hilfe eines Interferometers, wobei der die Prüfwelle erzeugende Kollimator des Interferometers relativ zum Prüfling verschoben wird und Interferogramme in verschiedenen Stellungen des Kollimators aufgenommen werden, in denen Teilbereiche der Prüfwelle an den Prüfling angepaßt sind, wobei
   - die Relativposition zwischen Kollimator (8;18;28,38) und Prüfling (12;22;32;42) in den verschiedenen Stellungen mit hoher Genauigkeit gemessen wird,
   - die Interferogramme mittels eines Bildsensors (Kamera 5; 25) elektronisch registriert und als Lichtwegdifferenzen ($l_{ist}(h)$) zwischen dem Prüfstrahl und dem Vergleichstrahl des Interferometers für die einzelnen Bildpunkte jedes Interferogrammes abgespeichert werden,
   - die interferometrisch gemessenen Lichtwegdifferenzen ($l_{ist}(h)$) mit für die verschiedenen Stellungen des Kollimators (8;18;28,38) errechneten bzw. durch Kalibrierung ermittelten Soll-Lichtwegdifferenzen ($l_{soll}(h)$) verglichen werden, wobei die Phasenfehler ($\Delta \phi (h)$) für die einzelnen Bildpunkte gebildet werden, und
   - daraus die Fehler der asphärischen Form der Wellenfront des Prüflings (12;22;32;42) insgesamt berechnet werden.

2. Verfahren nach Anspruch 1, dadurch gekennzeichnet, daß die Berechnung der Form der Wellenfront eine Mittelwertbildung einschließt, dergestalt, daß jeweils die Differenzen der Phasenfehler ($\Delta \phi (h)$) benachbarter Bildpunkte (xi,yi) und (xi + dx, yi) sowie (xi, yi + dy) gebildet werden, diese Differenzen gemittelt werden und anschließend zu dem gesamten Wellenfrontfehler des Prüflings aufintegriert werden.

3. Verfahren nach Anspruch 1, dadurch gekennzeichnet, daß die exakte Form der vom Kollimator (8,18;28,38) ausgehenden Wellenfront vorab aus den Linsendaten des Kollimators berechnet und bei der Ermittlung der Soll-Lichtwegdifferenz ($l_{soll}(h)$) berücksichtigt wird.

4. Verfahren nach Anspruch 1, dadurch gekennzeichnet, daß die exakte Form der vom Kollimator (8;18;28,38) ausgehenden Wellenfront durch eine interferometrische Vergleichsmessung gegen eine Fläche bekannter Form vorab bestimmt und bei der Ermittlung der Soll-Lichtwegdifferenzen ($l_{soll}(h)$) berücksichtigt wird.

5. Verfahren nach Anspruch 1, dadurch gekennzeichnet, daß der Kollimator bei jeder Prüfung in beiden Richtungen (+ z, - z) bewegt wird und die für die gleichen Stellungen in beiden Bewegungsabläufen gewonnenen Meßwerte gemittelt werden.

6. Vorrichtung zur Prüfung von optischen Elementen, die asphärische Wellenfronten liefern, bestehend aus
   - einem Interferometer (3,4;23,24)
   - einem die Prüfwelle erzeugenden Kollimator (8;18;28,38), welcher relativ zum Prüfling (12;22;32;42) verschiebbar ist,
   - einer Einrichtung (5-7;25) zur Aufnahme bzw. Darstellung der Interferogramme,
   - einen Längenmeßsystem (10,11;41) zur genauen Bestimmung der Relativposition zwischen Prüfling und Kollimator, wobei,
   - das Interferometer einen separaten Referenzarm besitzt und
   - die Einrichtung zur Aufnahme der Interferogramme einen Rechner (6) enthält, der so eingerichtet ist, daß er die aus den Interferogrammen bestimmten Lichtwegdifferenzen ($l_{ist}(h)$) und die aus der Form der Prüfwelle und der Sollform des Prüflings berechneten Lichtwegdifferenzen ($l_{soll}(h)$) für jeden Bildpunkt und in jeder Position ($s(h)$) des Kollimatorobjektivs bilden kann.

**7.** Vorrichtung nach Anspruch 6, dadurch gekennzeichnet, daß der Kollimator (8) eine Einzellinse ist.

**8.** Vorrichtung nach Anspruch 7, dadurch gekennzeichnet, daß der Prüfling eine Linse bzw. ein Linsensystem (32) ist und hinter dem Prüfling ein Spiegel (33;34) angeordnet ist.

**9.** Vorrichtung nach Anspruch 6, dadurch gekennzeichnet, daß zwischen dem Interferometer (3,4) und dem Kollimator (8) eine optische Doppelpaßanordnung (13-15) eingefügt ist.

**10.** Vorrichtung nach Anspruch 6, dadurch gekennzeichnet, daß der Prüfling (42) zwischen zwei Kollimatoren (28,38) im Meßarm eines Mach-Zehnder Interferometers angeordnet ist.

## Claims

**1.** A method for examining optical test components which supply aspherical wavefronts with the aid of an interferometer, whereby the collimator generating a test wave is displaced relative to the optical test component and interferograms are recorded for different positions of the collimator at which component regions of the test wave are adapted to the test component, whereby
- the relative position between the collimator (8; 18; 28, 38) and the test component (12; 22; 32; 42) is measured with high precision for the different positions;
- the interferograms are registered electronically by means of an image sensor (camera 5; 25) and stored as light path length differences ($l_{ist}$ (h)) between the test beam and the reference beam of the interferometer for the individual image points of each interferogram;
- the interferometrically measured light path length differences ($l_{ist}$ (h)) are compared to the desired light path length differences ($l_{soll}$ (h)) computed or measured by calibration for different positions of the collimator (8; 18; 28, 38) whereby the phase errors ($\Delta \phi(h)$) are formed for the individual image points; and
- the errors of the aspheric form of the wavefront of the test component (12; 22; 32; 42) is computed as a whole therefrom.

**2.** The method of claim 1, characterized in that the computation of the form of the wavefront includes a mean value determination by forming the differences of the phase errors ($\Delta \phi$ (h) of respective neighbouring image points (xi + dx, yi) and (xi, yi + dy), averaging these differences and subsequently integrating the averaged differences into the total wavefront error of the test component.

**3.** The method of claim 1, characterized in that the exact form of the wavefront emanating from collimator (8, 18; 28, 38) is initially computed from the lens data of the collimator and is considered for determining the desired light path length difference ($l_{soll}$ (h)).

**4.** The method of claim 1, characterized in that the exact form of the wavefront emanating from the collimator (8; 18; 28, 38) is initially determined by an interferometric comparison measurement against a surface of known form and is considered for determining the desired light path length difference ($l_{soll}$ - (h)).

**5.** The method of claim 1, characterized in that the collimator is moved in both direction (+z, -z) at each examination and that the measurement values, which are obtained for the same positions in both movement runs, are averaged.

**6.** Apparatus for examining optical test components which supply aspherical wavefronts, comprising
- an interferometer (3, 4; 23, 24),
- a collimator (8; 18; 28, 38) for generating a test wave, the collimator being displaceable with respect to the test component (12; 22; 32; 42),
- means (5 - 7; 25) for recording or / and displaying the interferograms,
- a length measuring means (10, 11; 41) for precisely determining the relative position between the test component and the collimator, wherein
- the interferometer has a separate reference arm and
- the means for recording the interferograms comprise a computer (6) which is construed so that it can determine the light path length differences ($l_{ist}$ (h)) from the interferograms and the light path length differences ($l_{soll}$ (h)) from the form of the test wave and from the desired form of the test

EP 0 370 229 B1

component for every image point and for every position (s (h)) of the collimator.

7. Apparatus of claim 6, characterized in that the collimator (6) is single lens.

8. Apparatus of claim 7, characterized in that the test component is a lens or lens system (32) and that a mirror (33; 34) is arranged behind the test component.

9. Apparatus of claim 6, characterized in that an optical double path unit (13 - 15) is inserted between the interferometer (3, 4) and the collimator (8).

10. Apparatus of claim 6, characterized in that the test component (42) is arranged in the measuring arm of a Mach-Zehnder interferometer between two collimators (28, 38).

**Revendications**

1. Procédé pour contrôler des éléments optiques, qui délivrent des fronts d'ondes asphériques, à l'aide d'un interféromètre, et selon lequel on déplace le collimateur, qui produit l'onde de contrôle, de l'interféromètre par rapport à l'objet à contrôler et on enregistre des interférogrammes dans différentes positions du collimateur, dans lesquelles des zones partielles de l'onde de contrôle sont adaptées à l'objet à contrôler,
   - on mesure avec une grande précision la position relative entre le collimateur (8;18;28,38) et l'objet à contrôler (12;22;32;42) dans les différentes positions,
   - on enregistre électroniquement les interférogrammes au moyen d'un capteur d'images (appareil de prise de vues 5; 25) et on les mémorise en tant que différences ($I_{réelle}$(h)) du trajet de la lumière entre le faisceau de contrôle et le faisceau de référence de l'interféromètre pour les différents points d'image d'un interférogramme,
   - on compare les différences ($I_{réelle}$(h)), mesurées de façon interférométrique, aux différences de consigne ($I_{consigne}$(h)) du trajet de la lumière, calculées pour les différentes positions du collimateur (8;18;28,38) ou déterminées par calibrage, les erreurs de phase ($\Delta\phi$(h)) étant formées pour les différents points d'image, et
   - à partir de là on calcule les défauts de la forme asphérique du front d'onde de l'objet à contrôler (12;22; 32;42).

2. Procédé selon la revendication 1, caractérisé en ce que le calcul de la forme du front d'onde inclut une formation de la valeur moyenne de telle sorte qu'on forme respectivement les différences des erreurs de phase ($\Delta\phi$(h)) de points d'image voisins (xi, yi) et (xi + dx, yi) ainsi que de (xi, yi + dy), qu'on forme la moyenne de ces différences et qu'on l'intègre ensuite sur l'ensemble de l'erreur du front d'onde de l'objet à contrôler.

3. Procédé selon la revendication 1, caractérisé en ce qu'on calcule au préalable la forme précise du front d'onde délivré par le collimateur (8,18;28,38), à partir des données de la lentille du collimateur et qu'on en tient compte pour la détermination de la différence de consigne ($I_{consigne}$(h)) du trajet de la lumière.

4. Procédé selon la revendication 1, caractérisé en ce qu'on détermine au préalable la forme précise du front d'onde, qui sort du collimateur (8;18;28,38), au moyen d'une mesure de comparaison interférométrique par rapport à une surface de forme connue et qu'on en tient compte lors de la détermination des différences de consigne ($I_{consigne}$(h)) du trajet de la lumière.

5. Procédé selon la revendication 1, caractérisé en ce que lors de chaque contrôle, on déplace le collimateur dans les deux directions (+z, -z) et qu'on forme la moyenne des valeurs de mesure obtenues pour les mêmes positions dans les deux cycles de déplacement.

6. Dispositif pour contrôler des éléments optiques, qui délivre des fronts d'ondes asphériques, constitué par
   - un interféromètre (3,4,23,24),
   - un collimateur (8;18;28,38) qui produit l'onde de contrôle et est déplaçable par rapport à l'objet à contrôler (12;22;32;42),
   - un dispositif (5-7;25) pour enregistrer et représenter les interférogrammes;

11

- un système de mesure de longueur (10,11;41) pour déterminer de façon précise la position relative entre l'objet à contrôler et le collimateur,

et dans lequel

- l'interféromètre possède un bras de référence séparé, et

- le dispositif d'enregistrement des interférogrammes contient un calculateur (6), qui est agencé de telle sorte qu'il peut former les différences ($I_{réelle}(h)$) du trajet de lumière, déterminées à partir des interférogrammes et les différences ($I_{consigne}(h)$) du trajet de la lumière, calculées à partir de la forme de l'onde de contrôle et à partir de la forme de consigne de l'objet à contrôler, pour chaque point d'image et dans chaque position ($s(h)$) de l'objectif du collimateur.

**7.** Dispositif selon la revendication 6, caractérisé en ce que le collimateur (8) est une lentille individuelle.

**8.** Dispositif selon la revendication 7, caractérisé en ce que l'objet à contrôler est une lentille ou un système de lentilles (32) et est disposé en arrière de l'objet et qu'un miroir (33;34) est disposé en arrière de l'objet à contrôler.

**9.** Dispositif selon la revendication 6, caractérisé en ce qu'un dispositif d'adaptation optique double (13-15) est inséré entre l'interféromètre (3,4) et le collimateur (8).

**10.** Dispositif selon la revendication 6, caractérisé en ce que l'objet à contrôler (42) est disposé entre deux collimateurs (28,38) dans le bras de mesure d'un interféromètre de Mach-Zehnder.

# Fig. 1

EP 0 370 229 B1

# Fig. 2

EP 0 370 229 B1

# Fig. 3

Fig. 4

Fig. 5

EP 0 370 229 B1